(19)

Europäisches
Patentamt
European
Patent Office
Office européen
des brevets

(11) **EP 2 085 925 A1**

(12) **EUROPEAN PATENT APPLICATION**

(43) Date of publication:
**05.08.2009 Bulletin 2009/32**

(51) Int Cl.:
***G06T 3/40*** (2006.01)

(21) Application number: **08159177.8**

(22) Date of filing: **27.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.02.2008 US 25909**

(71) Applicant: **TELEFONAKTIEBOLAGET LM ERICSSON (publ)**
**164 83 Stockholm (SE)**

(72) Inventors:
• **Rodrigues, Joachim**
  **SE-223 61 Lund (SE)**
• **De Lucia, Jorge**
  **SE-21434 Malmö (SE)**
• **Olsson, Magnus**
  **SE-223 50 Lund (SE)**

(74) Representative: **Bratt, Hanna Catharina et al**
**Ericsson AB**
**Patent Unit Mobile Platforms**
**Nya Vattentornet**
**221 83 Lund (SE)**

(54) **Arrangement for bicubic interpolation**

(57)    The invention relates to a hardware structure for improving the efficiency of bicubic interpolation in connection with scaling of digital images in a device, such as a computer or a communication device, especially in a constrained embedded system where metrics such as memory usage, algorithm complexity, and power consumption needs to be closely monitored. The arrangement comprises a first computation unit (2), and a second computation unit (3), being adapted to output squares and cubes of offset values of a bicubic interpolation function. At least one interpolation block (5) is adapted to receive pixel values of a colour channel, and comprises a number of interpolation cores (4), each adapted to compute a reduced interpolation function based on pixel values and squares and cubes of offset values. The proposed architecture is scalable and minimizes computational and area cost.

FIG 1

EP 2 085 925 A1

**Description**

**Technical field**

The present invention relates to an arrangement for bicubic interpolation, and more particularly, the invention relates to a hardware structure for improving the efficiency of bicubic interpolation in connection with scaling of digital images in a device, such as a computer or a communication device, especially in a constrained embedded system where metrics such as memory usage, algorithm complexity, and power consumption have to be closely considered.
Also, the invention relates to a corresponding device comprising the arrangement.

**Background**

Scaling images is not a new problem. Many mobile phones today implement image resizing functionality for basic photo-album management and thumbnail generation. These implementations however are usually implemented as software only, and put a high load on a small embedded system for it to be able to perform near real-time scaling, such as in the case of video streams.
A hardware accelerated solution will, except for meeting the real-time demands, also lower the load on generic digital signal processors, DSPs, and power requirements significantly. Thus, it is necessary to implement and optimize an algorithm that provides good hardware accelerated scaling properties. Bi-cubic scaling is a suitable in terms of quality but is a complex algorithm and, thus, hardware acceleration is required to minimize load on the main system's processors including DSPs, which may be shared with other applications.
A generic scaling algorithm consists of a few distinct components, the coordinate iterator, an interpolation kernel and the sliding pixel-window.

- **Coordinate iterator** Iterates mappings between the two image coordinate systems (original and scaled)

- **Interpolation kernel** Performs interpolations, chosen to be cubic in this invention.

- **Sliding pixel-window** Determines which original pixels are to be used for interpolation. The configuration (size) of this component depends on the chosen kernel.

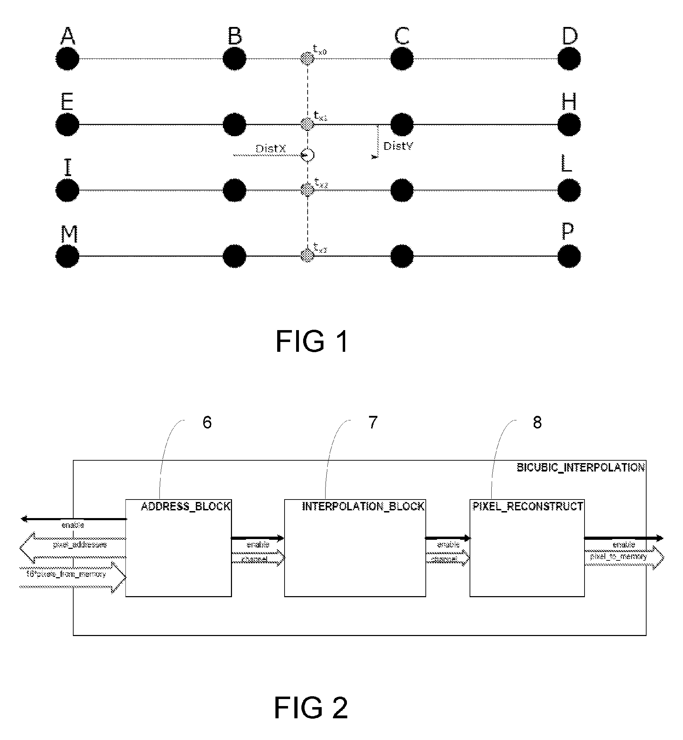

In a scaled image, the coordinate system is also scaled. To populate the color values of each new pixel in the scaled image, there is a need for coordinate-translation to the original image. This depends on the scaling factors which may differ for x and y.
In many image processing applications a sliding pixel-window is used. It refers to a virtual window, with boundaries specifying which set of pixels the algorithm requires at any given moment. Depending on which interpolation kernel is used, the size of the window varies. A bicubic interpolator requires a 4x4 window.
The window will slide over the original image. For each pixel in the scaled image that is to be calculated, the window positions itself with its center close to the corresponding coordinate in the original image. Knowing the size of the window, all required neighboring pixels can be addressed by the interpolator.
To interpolate over a 2D-surface, the interpolation function must be transformed from its one-dimensional space into 2D. The general approach is to define a separable interpolation function as the product of two one-dimensional functions.
The interpolation kernel is computes a new color value of each scaled pixel. To transform the one-dimensional interpolation kernel for usage with the two-dimensional image, interpolation is performed along each axis separately. For a bi-cubic scaling implementation, interpolations need to be carried out four times along the horizontal direction, and once along the vertical. In practice (using bi-cubic interpolation) this results in interpolation in both directions, i.e., find four intermediate pixels along the abscissas axis and finally along the intermediate pixels, which geometrically represents an interpolation along the ordinate. The algorithm does not specify this order. It is also possible to perform four interpolations along the vertical direction, and once along the horizontal.
An example of bicubic interpolation is shown in fig. 1. It also specifies offset distances DistX and DistY, which are the distances derived by the coordinate iterator. DistX is used in all four interpolations along the abscissas, and DistY is used in the interpolation along the ordinate.
The bicubic interpolation function is given as *interpolate* (a, b, c, d, t) = a polynomial of degree 3. where four data points (a, b, c, d) are interpolated at position t, and using the square and cube of t.
The Catmull-Rom polynomial may be used, since it is known to produce good visual quality. However, the invention itself is not restricted to a particular polynomial, but works with any polynomial of degree 3. For example, if mathematical correctness is preferred, another polynomial may be used.

The Catmull-Rom polynomial is defined as:

$$P(t) = (A + B*t + C*t^2 + D*t^3)/2$$

where

A= (2 * P1)

B= ((-P0) + P2)

C= (2 * P0 - 5 * P1 + 4 * P2 - P3)

D = ((- P0) + 3 * P1 - 3 * P2 + P3)
where *A, B, C, D* are auxiliary variables, and P0, P1, P2, P3 and t are the arguments of the function interpolate(P0, P1, P2, P3, t).

For data points A, B, C,... P, and DistX, DistY as shown, each color channel is calculated as:

tx0 = interpolate(A, B, C, D, DistX)
tx1 = interpolate(E, F, G, H, DistX)
tx2 = interpolate(I, J, K, L, DistX)
tx3 = interpolate(M, N, O, P, DistX)
new_color_component = interpolate(tx0, tx1, tx2, tx3, DistY)
tx0, tx1, tx2, tx3 are only intermediate points of interpolation.
Each call to interpolate() will calculate the square and cube of DistX and DistY, respectively.

**Prior art**

US published patent application No. 2007/0,136,409 is given as an example of prior art relative to bicubic interpolation. The document discloses an interpolator and designing method thereof which can be used for cubic interpolation. In one embodiment the proposed device uses a special square/cube calculating unit without giving any details about the specific implementation.
There is a need for a hardware accelerated solution for bicubic interpolation which among other things meets the real-time demands, and also lower the area and power requirements. The solution should also provide good scaling properties.

**Summary of the invention**

For each of the four interpolations performed in the horizontal direction, the square and cube of the horizontal interpolation offset, *DistX,* must be calculated. The present inventors have realized that this calculation is separable, and can be removed by extracting it into an external computational unit. This optimization results in lower computational and hardware cost. In a similar way, the calculations can be reduced in the vertical direction because the algorithm generally interpolates over several color channels, all using the same vertical interpolation offset, *DistY.* The simplified or reduced interpolation function is calculated by separate interpolation cores receiving the calculated squares and cubes of the offset values and the applicable data values of the respective call.
In a first aspect, the invention provides an arrangement for bicubic interpolation in scaling of a digital image.
According to the invention the arrangement comprises a first computation unit; a second computation unit; the first and second computation units being adapted to output squares and cubes of offset values of a bicubic interpolation function; at least one interpolation block adapted to receive pixel values of a colour channel; said interpolation block comprising a number of interpolation cores, each adapted to compute an interpolation function based on pixel values and squares and cubes of offset values. Four interpolation cores are connected to output four calculated interpolated values each based on four pixel values and squares and cubes of offset values in a first direction, and one interpolation core is connected to output a final calculated interpolated value based on said four calculated interpolated values and squares and cubes of offset values in a second direction.
In a second aspect, the invention provides telecommunication device comprising an arrangement as defined above.

The invention is defined in the claims 1 and 9, while preferred embodiments are set forth in the dependent claims.

Embodiments of the invention will now be described more in detail in connection with the enclosed drawings.

**Brief description of the drawings**

Figure 1 is a diagram of the data points and offset distances in scaling with bicubic interpolation.

Figure 2 is a block diagram of the bicubic interpolation architecture according to an embodiment of the invention.

Figure 3 is a block diagram of a quad channel interpolation arrangement according to an embodiment of the invention.

Figure 4 is a block diagram of a dual channel interpolation arrangement according to an embodiment of the invention.

Figure 5 is a block diagram of a time-multiplexed design of figure 4.

Figure 6 is a block diagram of a single channel interpolation arrangement according to an embodiment of the invention.

Figure 7 is a block diagram of a time-multiplexed design of figure 6.

Figure 8 is a block diagram of a computational unit and an interpolation core for one interpolation according to an embodiment of the invention.

**Detailed description of preferred embodiments**

The invention will be described with reference to a general interpolation arrangement. The arrangement can be built in any device with the need for fast computation of interpolation values in connection with bi-directional scaling of digital images. The same architecture is applicable for downscaling as well as upscaling. The device may for example be a computer or a communication device such as a mobile telephone, PDA, having processor power to compute the offset values either by SW or HW required for the interpolation function and memory space and a display with display controllers, which all may be of conventional design.

Only parts relevant to the invention are described while other components may be conventional.

In an embodiment of the invention in figure 2, the bi-cubic interpolation architecture consists of three units, an address block unit 6, interpolation block unit 7, and a pixel assembler block 8. Figure 2 shows how the different parts of the bi-cubic interpolation architecture are connected and communicate with each other. Each block works independently from the others, where one block can be replaced by another block without affecting the whole architecture functionality.

The main function of the address block unit 6 is to calculate the address for a new pixel and its position as well as offset values DistX and DistY based on the original picture and to feed the interpolation block unit 7 with necessary data. 16 pixels are received from memory to run the bi-cubic interpolation. These 16 pixels are placed in a 4x4 sliding window as outlined in the introduction with reference to figure 1.

The interpolation block unit 7 comprises one or several interpolation blocks 5 as described in detail below. It receives pixel data and offset values DistX and DistY from the address block unit 6 and outputs interpolated pixel values.

In the pixel assembler block 8 the interpolated pixel (color) channels are received and stored in a register until the whole pixel is interpolated. After all color channels have arrived the channels are put together forming the interpolated pixel. The result will then be sent to the memory.

As mentioned above, squares and cubes of the bicubic interpolation calculation are separable. Then the calculation complexity is reduced to:

tx_sqr = DistX * DistX
tx_cube = DistX * tx_sqr (=DistX * DistX * DistX)
tx0 = reduced_interpolate(A, B, C, D, DistX, tx_sqr, tx_cube)
tx3 = reduced_interpolate(M, N, O, P, DistX, tx_sqr, tx_cube)
where reduced_interpolate represents the simplified interpolation function.

In a similar way, the values for ty sqr and ty cube are calculated, and stored between invocations of the channel interpolator. Thus, the final calculation of the new color channel value txy is reduced to:

txy = reduced_interpolate(tx0, tx1, tx2, tx3, DistY, ty_sqr, ty_cube)

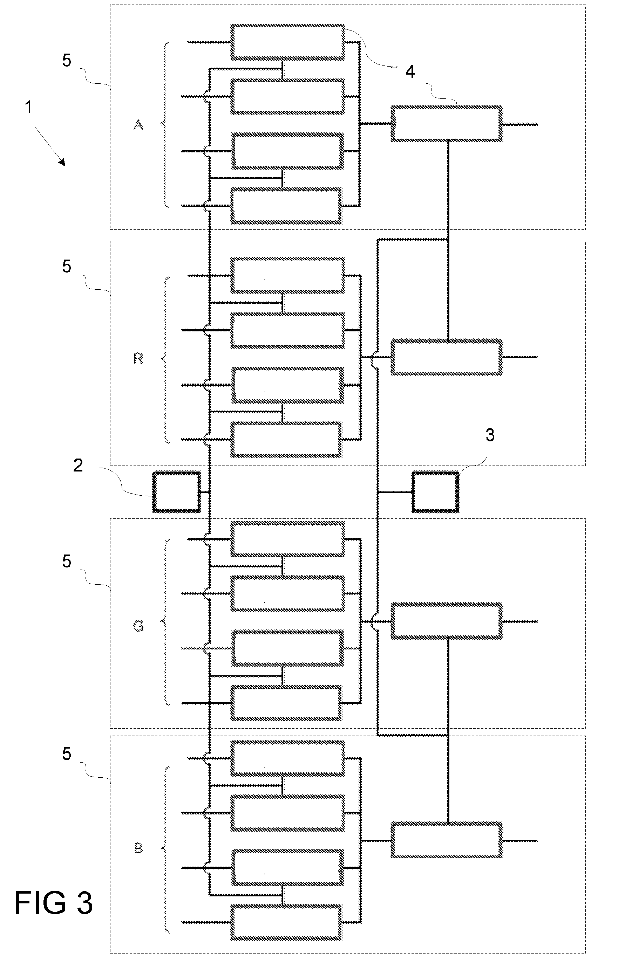

Figures 3, 4, and 6 show three differently scaled interpolation arrangements. The interpolation arrangements have different numbers of interpolation blocks, but always two computational units, as part of the interpolation calculations is extracted. Thus, the number of blocks may be optimized in dependence of desired performance and design.

A block diagram for a four channel (ARGB) Full HDTV accelerator is depicted in Figure 3. The interpolation arrangement 1 comprises four interpolation blocks 5 of identical design, each block 5 comprising five interpolation cores 4. The arrangement 1 further comprises two computational units, one computational unit 2 receiving the horizontal offset values DistX, and one computational unit 3 receiving the vertical offset values DistY (or vice versa).

The computational units 2, 3 compute the squares and cubes of the offset values and feed them to the interpolation blocks 5. In the embodiment shown, the horizontal interpolation is done first, so the computational unit 2 feeds four interpolation cores 4, while the computational unit 3 feeds one interpolation core 4 in each block 5.

Each interpolation block 5 also receives one colour channel A, R, G, B, each channel consisting of four pixel data values corresponding to the pixel points A, B, C, D, E, ..., P (Fig 1). Thus, in the top interpolation block 5, the top horizontal interpolation core 4 calculates an interpolated value from points A, B, C, D, together with the externally calculated squares and cubes of the horizontal offset values DistX. Similarly, the other three horizontal interpolation cores 4 calculate interpolated values from points E-H, I-L, and M-P, respectively, with the same externally calculated horizontal squares and cubes. The four horizontal interpolation cores 4 operate in parallel in a time-multiplexed fashion. These calculated interpolated values are fed to the single vertical interpolation core 4 that calculates a final interpolated value from these calculated values together with the externally calculated squares and cubes of the vertical offset value DistY.

The other interpolation blocks 5 calculate interpolated values in the same manner for the colour channels R, G, and B, respectively, to output four values to the pixel assembler 8.

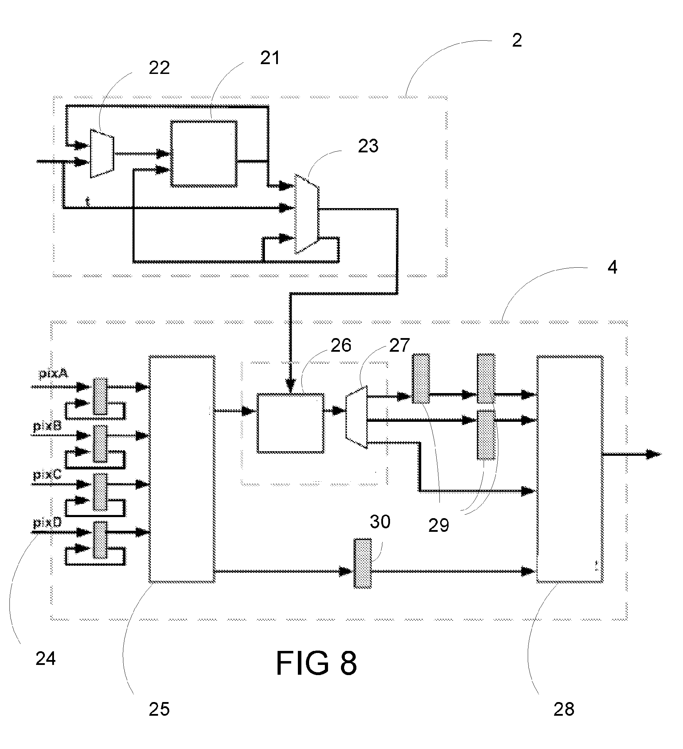

As the four interpolation blocks 5 and the computational units 2, 3 work in parallel, the whole quad channel interpolation arrangement 1 of figure 3 is capable of computing a final interpolated value every third clock cycle. Thus, this arrangement may provide a frame rate of 36 FPS using an intermediate clock frequency for Full HDTV. (A higher frame rate may be achieved using a higher clock frequency, e.g. above 200 MHz). The timing is discussed in detail with reference to figure 8.

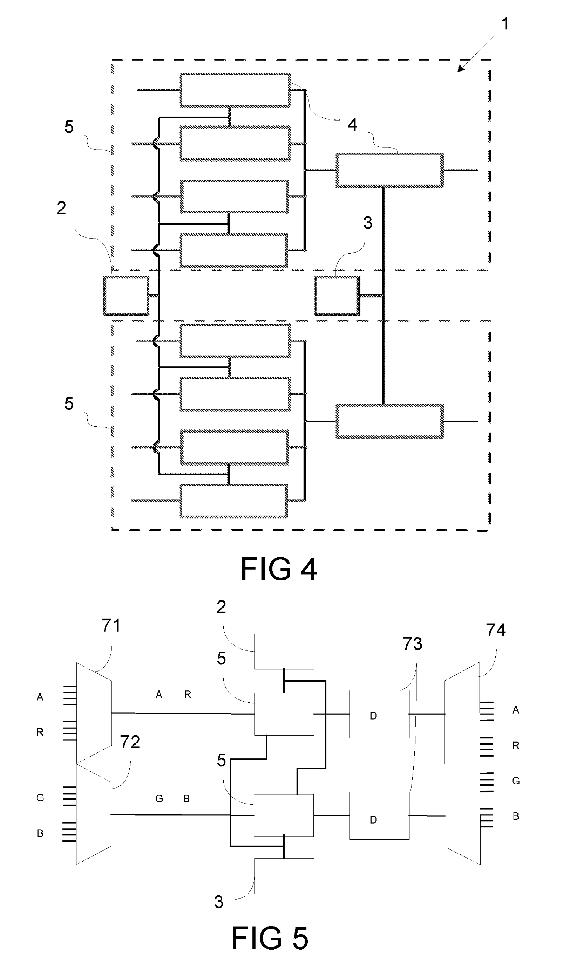

In Figure 4 two interpolation blocks 5 and two computational units 2, 3 are reused in a time-multiplexed fashion, i.e., the two interpolation blocks 5 interpolate channels A and G alternatively with channels R and B. Due to pipelining, an interpolation result is ready every third clock cycle and a final pixel result every 6th clock cycle. Thus, this arrangement may provide a frame rate of 36 FPS for Half HDTV. (Note that the image size of Half HDTV is approximately half the image size of Full HDTV).

Figure 5 shows a possible arrangement for a time-multiplexed architecture. Multiplexers 71 and 72 arrange the colour channels A,R, and, G,B, respectively, in consecutive clock cycles for the computation with the two interpolation blocks 5 and computational units 2, 3. The results are saved in registers 73 and output by means of a demultiplexer 74 to the pixel assembler block 8. Due to pipelining, an interpolation result is ready every third clock cycle for the four channels.

As seen above, the architecture is scalable and as an example serves Half HDTV with the same frame rate as Full HDTV, but with reduced hardware cost. Compare figure 3 and 4. The hardware is developed for high resolution FPS. The higher the resolution and frame rate the more effective the architecture.

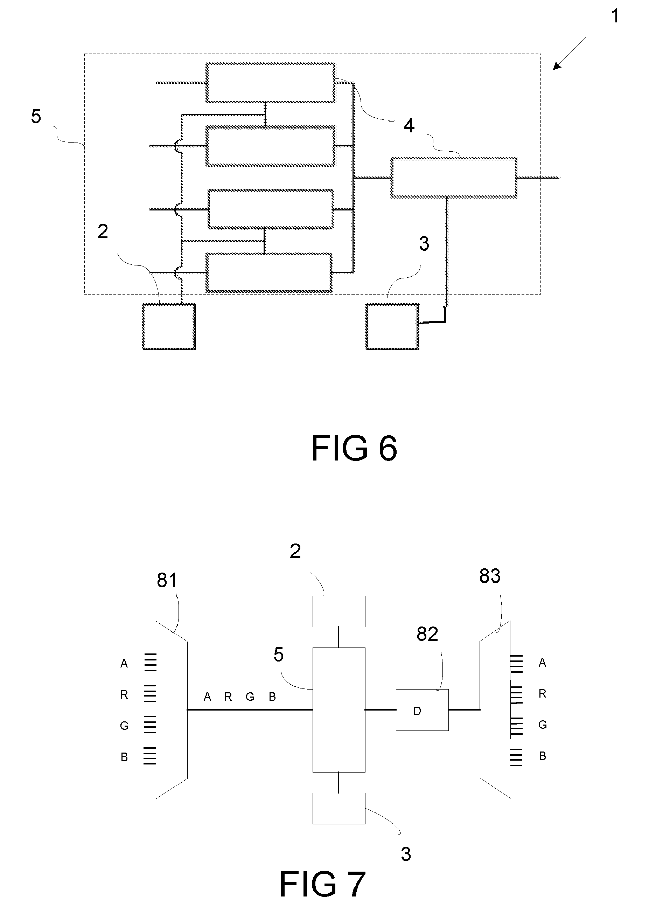

In Figure 6 one interpolation block 5 and two computational units 2, 3 are reused in a time-multiplexed fashion, i.e., the single interpolation block 5 interpolates channels A, G, R, and B alternatively. Due to pipelining, an interpolation result is ready every third clock cycle and a final pixel result every 12th clock cycle. Thus, this arrangement may provide a frame rate of 36 FPS for standard television, SDTV. (Note that the image size of SDTV is approximately half the image size of Half HDTV).

Figure 7 shows a possible arrangement for a time-multiplexed architecture. A multiplexer 81 arrange the colour channels A, R, G, B in consecutive clock cycles for the computation with the single interpolation block 5 and computational units 2, 3. The results are saved in a register 82 and output by means of a demultiplexer 83 to the pixel assembler block 8. Due to pipelining, an interpolation result is ready every third clock cycle for the four channels.

Figure 8 shows how one interpolating core 4 with its corresponding parts works together with one computational unit 2. The computational unit 2 comprises one extracted multiplier 21 and two de-multiplexers 22 and 23. The square and cubic calculations are performed in here and sent to the interpolation core 4.

The interpolation core 4 comprises four inputs 24 receiving pixel data e.g. A, B, C, D. A first coefficient calculator 25 calculates the coefficients that are going to be multiplied with results from the computational unit 2. This coefficient calculator 25 will send one result every clock cycle to an internal multiplier 26 with a difference in the last one, where also a result is sent directly to a second crop module 28 via a register 30. The multiplier 26 is followed by a de-multiplexer 27. The values arrive to the internal multiplier 26 from the extracted multiplier 21 where they are multiplied with the coefficients coming from the coefficient calculator 25. After the multiplication is done, the result is sent to de de-multiplexer 27 where it is decided on which output it is switched to the crop module 28, depending on which clock cycle the value arrives.

The crop module 28 is the last module of the interpolating core 4. This crop module 28 receives the different values from the multiplier 26 and from the coefficient calculator 25 simultaneously. In order to guarantee that all values arrive synchronized, three registers 29 are placed between the internal multiplier 26 and crop module 28. Here the different values are added, and will be cropped, if required.

In the first clock cycle the interpolation offset is stored in the computational unit 2 and sent to the internal multiplier 26. In the second clock cycle the square result is sent and in the third clock cycle the cubic result. Simultaneously, the coefficient calculator 25 sends one result every clock cycle to the internal multiplier 26 as well as one result to the crop module 28 in the third clock cycle. Thus, the interpolation core 4 and the computational units 2 require three clock cycles to calculate the final interpolated value.

The interpolation core 4 is the block used to build the interpolation blocks 5 of figures 3, 4, and 6, each block 5 comprising four parallel interpolation cores 4 and one interpolation core 4 in series after these. The sixteen pixel values entering a block 5 will be arranged such that the horizontal part of the calculation is made first with the parallel interpolation cores 4, and then the result is sent to the interpolation core 4 in series thereafter for the vertical calculation. Seen individually, each interpolation of a pixel value will take more than three clock cycles, but due to pipelining an interpolated value is delivered every third clock cycle.

The arrangement is independent of the colour space, in other words, equally applicable to YUV and YCbCr, for example. Furthermore, the application is not limited to (4*8bits).

One advantage of this new architecture compared to the prior art is that it is more scalable friendly. When upgrading for higher performance, an enhanced architecture will have a linear likely area increase compared to a quadratic increase demand in throughput, as the computational units are reused for all interpolation blocks 5. Using this approach, the area cost will not double when the pixel throughput is doubled. This is due to that the number of multipliers is minimized, which are the most area consuming components in a bi-cubic interpolation function.

The interpolation arrangement described herein can be implemented by means of hardware and/or software comprising several distinct elements. The mere fact that certain measures are recited in mutually different dependent claims or described in different embodiments does not indicate that a combination of these measures cannot be used to advantage.

The invention is not limited for hardware implementation since a software realization would have similar properties when it comes to DSP load. On the other hand, the software implementation would run significantly slower.

It should be emphasized that the term "comprises/comprising" when used in this specification is taken to specify the presence of stated features, integers, steps or components but does not preclude the presence or addition of one or more other features, integers, steps, components or groups thereof.

The previous description of particular embodiments is provided to enable persons skilled in the art to make and use the present invention. Various modifications to these embodiments will be apparent to those skilled in the art, and the generic principles defined herein may be applied to other embodiments without departing from the scope of the invention. The present invention is not intended to be limited to the embodiments shown herein but is only limited to the claims below.

**Claims**

1. An arrangement (1) for bicubic interpolation in scaling of a digital image, comprising a first computation unit (2); a second computation unit (3); the first and second computation units (2, 3) being adapted to output squares and cubes of offset values of a bicubic interpolation function; at least one interpolation block (5) adapted to receive pixel values of a colour channel; said interpolation block (5) comprising a number of interpolation cores (4), each adapted to compute an interpolation function based on pixel values and squares and cubes of offset values, wherein four interpolation cores (4) are connected to output four calculated interpolated values each based on four pixel values and squares and cubes of offset values in a first direction, and one interpolation core (4) is connected to output a final calculated interpolated value based on said four calculated interpolated values and squares and cubes of offset values in a second direction.

2. An arrangement according to claim 1, wherein one interpolation block (5) and two computation units (2, 3) are connected in a time multiplexed loop (81, 82) to interpolate a number of channels (A, R, G, B) in succession.

3. An arrangement according to claim 2, wherein the arrangement is adapted to interpolate one pixel composed by four colour channels (A, R, G, B) for standard television, SDTV.

4. An arrangement according to claim 1, wherein two interpolation blocks (5) and two computation units (2, 3) are connected in a time multiplexed loop (71, 72, 73) to interpolate two channels (A, R, and G, B, respectively) in parallel.

5. An arrangement according to claim 4, wherein the arrangement is adapted to interpolate one pixel composed by four colour channels (A, R, G, B) for half high definition television, half HDTV.

6. An arrangement according to claim 1, wherein four interpolation blocks (5) and two computation units (2, 3) are connected to interpolate four channels (A, R, G, B) in parallel.

7. An arrangement according to claim 6, wherein the arrangement is adapted to interpolate one pixel composed by four colour channels (A, R, G, B) for high definition television, full HDTV.

8. An arrangement according to any one of the preceding claims, wherein the first and second computational units (2, 3) each comprises a single multiplier (21), and each interpolation core (4) comprises a single multiplier (26).

9. A telecommunication device comprising an arrangement according to any one of the preceding claims.

FIG 1

FIG 2

FIG 3

FIG 4

FIG 5

FIG 6

FIG 7

FIG 8

Europäisches
Patentamt

European
Patent Office

Office européen
des brevets

**EUROPEAN SEARCH REPORT**

Application Number

EP 08 15 9177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 930 407 A (JENSEN PHILIP E [US]) 27 July 1999 (1999-07-27) * figures 4,6 * * abstract * * page 11, column 6, line 64 - page 12, column 7, line 31 * * page 11, column 5, line 64 - line 67 * | 1-8 | INV. G06T3/40 |
| Y | * page 12, column 7, equation 1 * ----- | 9 | |
| Y | APPLE: "iPhone User's Guide" INTERNET CITATION, [Online] 30 June 2007 (2007-06-30), XP002474183 Retrieved from the Internet: URL:http://mesnotices.fr/manuel-notice-mod e-emploi/APPLE/IPHONE%2D%5FE#> [retrieved on 2008-03-27] publication date 06-2007 on p. 117 * page 64 * ----- | 9 | |
| A | NEIL A DODGSON: "Quadratic Interpolation for Image Resampling" IEEE TRANSACTIONS ON IMAGE PROCESSING, IEEE SERVICE CENTER, PISCATAWAY, NJ, US, vol. 6, no. 9, 1 September 1997 (1997-09-01), XP011026206 ISSN: 1057-7149 * abstract * * figures 1,2,4 * section I, paragraph 3 section II, last paragraph section III, last equation and last paragraph section V.D, first paragraph ----- -/-- | 1-9 | TECHNICAL FIELDS SEARCHED (IPC) G06T |

The present search report has been drawn up for all claims

| Place of search | Date of completion of the search | Examiner |
|---|---|---|
| Munich | 9 April 2009 | Scholz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

**EUROPEAN SEARCH REPORT**

Application Number

EP 08 15 9177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERIC LENGYEL: "MATHEMATICS FOR 3D GAME PROGRAMMING AND COMPUTER GRAPHICS (pages 453-456, 467-469)" 2004, CHARLES RIVER MEDIA, INC. , BOSTON, MA, USA , XP002522940 * page 469; figure 15.8 * page 453, equation 15.1 page 468, equations 15.46-15.47 ----- | 1-9 | |

TECHNICAL FIELDS
SEARCHED      (IPC)

The present search report has been drawn up for all claims

| Place of search | Date of completion of the search | Examiner |
|---|---|---|
| Munich | 9 April 2009 | Scholz, Volker |

EPO FORM 1503 03.82 (P04C01)

**ANNEX TO THE EUROPEAN SEARCH REPORT
ON EUROPEAN PATENT APPLICATION NO.**

EP 08 15 9177

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2009

| Patent document cited in search report | Publication date | Patent family member(s) | Publication date |
|---|---|---|---|
| US 5930407 A | 27-07-1999 | NONE | |

EPO FORM P0459

For more details about this annex : see Official Journal of the European Patent Office, No. 12/82

**EP 2 085 925 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070136409 A